# EUROPEAN PATENT APPLICATION

(11) **EP 0 781 989 A1**
(43) Date of publication of application: **02.07.1997**
(21) Application number: 95203659.8
(22) Date of filing: 28.12.1995
(51) Int. Cl.: G01N 21/64, B32B 27/18

(54) **A diagnostic method for a multi-layer material**

(71) Applicant: THE PROCTER & GAMBLE COMPANY, Cincinnati, Ohio 45202 (US)
(72) Inventor: Bechmann, Georg, B-1853 Strombeek-Bever (BE)
(74) Representative: Engisch, Gautier

(57) **Abstract**

A method enabling the visualisation of cracking and stresses in multilayer material is described. This is achieved by providing the intermediate layer (12) of the multilayer material (10) with different fluorescent dyes (15,15'), eg lumilux yellow/green CD343, blue CD312, printed on different sides of the intermediate layer. By analysing the fluorescence emitted by the dyes when excited by an appropriate source of electromagnetic radiation it is possible to determine cracking and/or fissures in the multilayer material. A multilayer material adapted for applying the method is also described.

## Description

### Field of the invention

The present invention relates to a method enabling to visualise cracking and stresses in the multi-layer material and a multi-layer material adapted to perform this method.

### Background of the invention

A wide variety of single-use type packaging materials are known. Many of said packaging materials are in the form of materials made of different layers. Said various layers allow to obtain a composite, multi-layer material in a desired combination of properties otherwise not available from a single layer of a single composition.

The layers can be variably chosen in function of the protection needed for the contained material. For example, in the field of detergent packaging containing detergent there are severe demands upon the properties of the multi-layer material. Such properties are, for example, moisture impermeability, gas impermeability, ultraviolet rays-intercepting property, water-proof property, mechanical strengths, cost, flexibility, and the like. In particular, for dry laundry compounds, which sometimes are compositions sensitive to moisture and/or oxygen, the layered material can comprise an aluminium foil coated to stiffer materials, like cardboard or paper. The multi-layer materials comprising a layer of aluminium foil possess extremely high gas barrier properties. However, this type of multi-layers is becoming more controversial from the environmental viewpoint. Consequently, the packaging technology has long been in need of being able to develop an aluminium-free packaging material, that uses materials offering high gas and moisture barrier characteristics, but conferring greater environmental acceptance to the multi-layer material.

Granular detergents are transported and delivered to the consumer also in so-called refill bags, instead of the commonly used cartons. These bags are made of pliable and flexible material. This pliable and flexible material has to be such that cracking and/or fissures are avoided to efficiently contain granular substances. Indeed, cracking and fissures may otherwise facilitate or enable the passage of gas and/or moisture through said material. Consequently, such a pliable material and the corresponding bag may lose the barrier characteristics beneficial for a good storage of the content. Furthermore, part of said detergent may be lost during transportation through said cracking and/or fissures.

Usually, certain layers are located at least in between other two layers to protect these layers in a multi-layer material. Indeed, certain layers used in a multi-layer material are made of stress sensitive materials. For example, perfume barrier layers comprising an aluminium foil, or a layer of ethyl vinyl alcohol co-polymer (=EVOH), or a lacquer forming mixture as described in the European application No. 94870159.4, are considered to be stress sensitive materials. Nevertheless, we found that cracking and/or fissures may still occur in the most stress sensitive layers of a multi-layer material especially when said multi-layer material is used on packaging machines. Since the most stress sensitive layers are intermediate layers, it is rather difficult to determine the presence and quantify the cracking and fissures in these intermediate layers of the multi-layer material.

Indeed, possible diagnostics able to determine cracking and fissures are microscopy or confocal laser microscope analysis. However, for the microscopy a sample of the multi-layer material has to be cut through its thickness bringing the uncertainty that the cut itself may have created the cracking and/or fissures. The confocal laser microscope analysis requires rather complicated instruments and detecting systems which are not always available to the packaging industry. Finally, both these methods do not allow to check the status of the intermediate layer when said multi-layer material is running on a packaging machine. Consequently, it is not possible to find out which part of the packaging machine may be responsible for the cracking and/or fissures in the intermediate layer.

It is therefore an object of the present invention to provide a method which determines in an easy and cost-effective manner the presence of cracking and fissures also in an intermediate layer of a multi-layer material.

A further object of the present invention is a flexible multi-layer material which facilitates the performing of the method to determine cracking and/or fissures in an intermediate layer of the flexible multi-layer material.

### Summary of the invention

The present invention is a method to determine cracking and/or fissures in an intermediate, stress sensitive layer of a multi-layer material comprising the following steps:
- making of a multi-layer material comprising the intermediate layer, the intermediate layer comprising different fluorescence dyes printed on different sides of said intermediate layer;
- providing an electromagnetic radiation from an external source which has a wavelength range which is substantially absorbed by said intermediate layer and at the same time excites the fluorescence dyes to emit electromagnetic radiation in a different wavelength range with respect to the electromagnetic radiation of the external source;
- detecting the electromagnetic radiation emitted by the fluorescence dyes by a light measuring system.

The present invention further provides a multi-layer material comprising an intermediate, stress sensitive layer which comprises different fluorescence dyes printed on the different sides of the intermediate layer to enable the method to determine cracking and/or fissures in the intermediate layer of the multi-layer material.

### Brief description of the drawings

Figure 1 is a cross sectional view through the thickness of a multi-layer material.

Figures 2a and 2b schematically show the emissions of light from the intermediate layer of a multi-layer material when there are no cracking and/or fissures in said intermediate layer.

Figures 3a and 3b schematically show the emissions of light from the intermediate layer of a multi-layer material when there are cracking and/or fissures in said intermediate layer.

### Detailed description of the invention

The multi-layer material (10) of the present invention comprises an intermediate layer (12) sandwiched between at least two other layers (14, 14'). The layers sandwiching the intermediate layer may be selected from the group consisting of: paper, cardboard, plastic materials and a combination thereof. As plastic materials polyolefines, like polyethylene (=PE), or (oriented) polyethylene terephthalate, or (oriented) polypropylene or a combination thereof, may be used. The sandwiching of the intermediate layer between the other layers may be achieved by laminating the layers together. The lamination of layers means that the different layers are attached to each other in a solid state, i.e. the different layer are not melted together. In the lamination process low temperatures are needed and the cost of the manufacture of the multi-layer material can be therefore reduced.

As a preferred option, a tie layer may be used at least on one side of the intermediate layer (12) to strengthen the bonding between the intermediate layer and the other layers. Said tie layer is preferably made of glue. A preferred glue is a polyurethane-based adhesive. By polyurethane-based adhesives we intend all the adhesives based on polyurethane known to the person skilled in the art. In particular, solvent based (including water) and solvent-free adhesive systems comprising polyurethane are usable for the purpose of the present invention. This tie layer can be also applied on both sides of said intermediate layer and/or of the other layers.

The intermediate layer (12) comprises a stress sensitive layer, i.e. a layer which is susceptible to cracking and/or fissures through the thickness of the layer in a relatively easy manner. Usually, these cracking and/or fissures deteriorate the properties of the intermediate layer for which the intermediate layer was foreseen in the multi-layer material. For example, an intermediate, stress sensitive layer comprising a perfume barrier layer loses its perfume barrier characteristics once there are cracking and/or fissures in the perfume barrier layer. Preferably, the perfume barrier layer is made of a material selected from the following group: aluminium (metal) foil, ethyl vinyl alcohol copolymer (=EVOH), lacquer coating and a combination thereof. Possible lacquer coatings are, for example, Flexoplastol® 2KB-Lacquer 9A 918 920 or Flexoplastol® 2KB-Lacquer 9A 919 920 commercially available from BASF Lacke + Farben AG, Stuttgart. Other intermediate, stress sensitive layers may comprise, for example, a gas barrier layer, an oxygen barrier layer, a moisture barrier layer, or a combination thereof.

The intermediate layer (12) according to the present invention further comprises a printing (15, 15') on each side of the intermediate layer. The printing is made by techniques known the person skilled in the art, like gravure printing or flexo-printing. The gravure printing is a printing process where the ink is transferred from an engraved metal surface. The flexo printing is a relief printing where the ink is transferred from a surface which is raised above the non-printing part and carrying the ink on a surface to be printed. Preferably, the printing on each side of the intermediate layer is homogenous, i.e. the printing is uniform without interruptions and/or specific patterns.

According to the present invention, each printing (15, 15') comprises a fluorescence dye. The printings on opposite sides of an intermediate layer comprises different dyes. The difference between the fluorescence dyes is determined by the different range of electromagnetic wavelengths emitted by the fluorescence dyes when exposed to the same source of electromagnetic radiation. An example of fluorescence dyes which can be used in embodiment according to the present invention are the following: Lumilux yellow-green CD-343, hereinafter called Dye A, and Lumilux blue CD-312, hereinafter called Dye B. Both dyes are commercially available from Riedel D'Haen. Both dyes can be excited by a source of ultraviolet (=UV) light, but the emission spectrum is different for these two dyes. Dye A emits electromagnetic radiation at about the wavelength of 520 nm, i.e. in the green-yellow light spectrum. Dye B emits, however, electromagnetic radiation at about the wavelength of about 450 nm, i.e. in the blue light spectrum. Preferably, fluorescence dyes with a high quantum yield are used in the present invention. In this manner, it is possible to use relatively low amounts of these dyes for the purpose of the present invention. Preferably, the amounts of the dyes with a high quantum yield is less than 0.5 % by the weight of the lacquer coating, more preferably less than 0.2 % by weight of the lacquer coating.

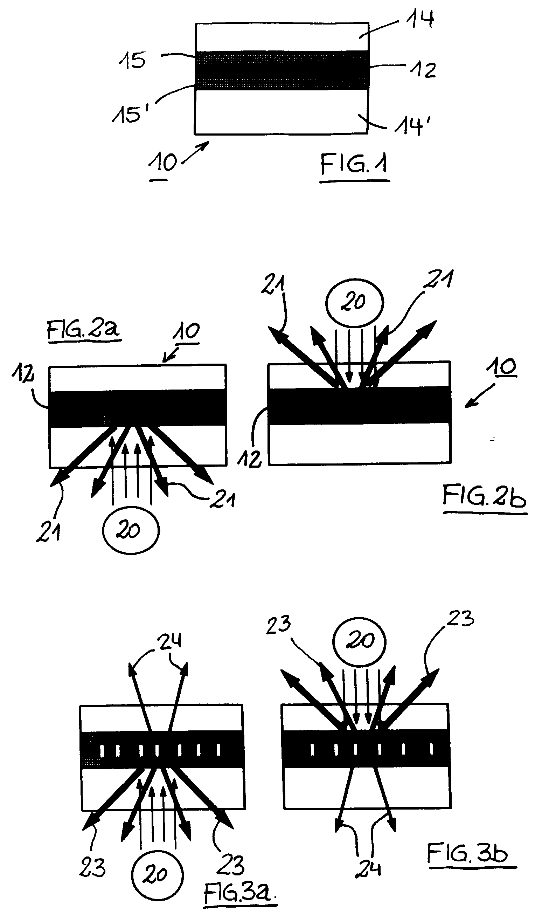

An example of a multi-layer material (10) according to the present invention schematically shown in Figure 1 is the following:
- the intermediate layer (12) is a perfume barrier layer comprising a lacquer coating;
- each side of the intermediate layer (12) comprises a printing (15, 15');
- the printing (15) on one side of the intermediate layer comprises the Dye A, whereby the printing (15') on the opposite side of the intermediate layer, with respect to the printing of Dye A, comprises the Dye B;
- the intermediate layer with the two printings on opposite sides of the intermediate layer is sandwiched between two layers of PE (14, 14').

The multi-layer material according to the present invention are able to be reformed into flexible bags. These may be manufactured according to the methods well known to the man skilled in the art, and described for example in the U.S. Patent No. 3 380 646 or in the European Application No. 93870118.2. The process may be a continuous, a semi-continuous or a multi-step batch process.

The use of the packages made from any of the multi-layer material described above according to the present invention are various. In practice it is usable for any product which is susceptible to quality degeneration. Preferably the use is for non-food products in general, more preferably for granular detergent. Loosing the perfume to the atmosphere or letting moisture penetrate and contact the contained substance easily degenerates said detergent. In particular, said container is adequate to contain also dry laundry additives such as sodium percarbonate, sodium perborate and olefin in combination or separated from the granular detergent. Such compounds are typically present in laundry and household cleaning and bleaching compositions and are generally very sensitive to moisture.

The multi-layer material according to the present invention allows to determine, if the intermediate layer has cracking and/or fissures through the thickness of the intermediate layer. This determination is made by exposing the multi-layer material to a source of electromagnetic radiation. We found that a source of ultraviolet (=UV) radiation (20) enables the determination of cracking and/or fissures in the example of the multi-layer material described above. Indeed, the PE layers are substantially transparent to the UV radiation, but this UV radiation is then substantially absorbed by the intermediate layer (12). As hereinafter referred to, a "substantially transparent" layer means that the layer does not absorb the electromagnetic radiation in a sufficient amount to impede the excitation of the underlying dye and the emission of electromagnetic radiation by the dye. However, a "substantially absorption" of electromagnetic radiation by a layer means that the amount of electromagnetic radiation which is able to pass through this layer is not sufficient to excite the dye located on the opposite side of the layer.

The intermediate layer (12) may further comprise an UV-light absorber of the electromagnetic radiation emitted by the source (20). This is useful, in case the intermediate layer is not sufficiently absorbent to the electromagnetic radiation of the source. Having a source of UV-light as described in the example above, a suitable UV-light absorber is TINUVIN 384 from CIBA. The preferred amount of this UV-light absorber is less than 5 % by weight of the lacquer coating, more preferably less than 0.5 % by weight of the lacquer coating.

In case there are no cracking and/or fissures in the intermediate layer (12), as schematically illustrated in Figures 2a and 2b, only the dye being in front of the intermediate layer with respect to the source of electromagnetic radiation is excited to emit its characteristic fluorescence radiation (21). Taking again as an example the multi-layer material described above, when Dye A is directly exposed to the source of UV radiation, then this dye emits yellow-green fluorescence radiation in the wavelength range of about 520 nm, as schematically shown in Figure 2a. However, the Dye B is not exposed to the UV radiation, since the intermediate layer substantially absorbs the UV radiation. Consequently, Dye B does not emit in this case any characteristic fluorescence radiation and only the fluorescence radiation of Dye A can be detected. However, if Dye B is exposed to the UV radiation, as schematically shown in Figure 2b, then this dye emits blue fluorescence radiation in the wavelength range of about 450 nm, whereby no yellow-green fluorescence radiation from Dye A can be detected.

Furthermore, this means that the fluorescence radiation of Dye B is a different electromagnetic radiation with respect to Dye A in the electromagnetic wavelength spectrum. Therefore, the electromagnetic emissions of the two dyes can be readily distinguished from one another. This is used to determine cracking and/or fissures in the intermediate layer. Indeed, as schematically represented in Figures 3a and 3b, if the intermediate layer comprises cracking and/or fissures, part of the UV radiation is able to pass through the intermediate layer. Consequently, the UV radiation is able to excite also the dye on the other side of the intermediate not directly exposed to the source of electromagnetic radiation independently from the location of the source of the electromagnetic radiation with respect to the side of the multi-layer material. This means that both yellow-green (23) and blue fluorescence radiation (24) can be detected at the same time, whereas in the previous case described in Figures 2a and 2b above only of the specific fluorescence light could be detected.

The detection of the electromagnetic radiation emitted by the fluorescence dyes is preferably achieved by at least two light measuring systems. Possible light measuring systems may comprise, for example, spectroscopic devices, like Diode Arrays, video cameras, or a combination thereof. Each light measuring system is provided each with different light filters appropriate to the different emitted fluorescence radiation of the dyes. For the above mentioned example, one light measuring system should comprise a yellow-green filter which allows the passage to the electromagnetic radiation having principally the emitting wavelength of Dye A. Whereby the other light measuring system should comprise a blue filter which allows the passage to the electromagnetic radiation having principally the emitting wavelength of Dye B.

The light measuring system may be positioned on any side of the intermediate layer, i.e. on the same side as the source of electromagnetic radiation or on the opposite side of the intermediate layer with respect to the source of electromagnetic radiation.

We found that the intensity ratio of the emitted fluorescence radiation can be directly correlated to the strain in the intermediate layer. Based on this correlation, strains which create cracking and/or fissures in the intermediate layer can be visualised. Furthermore, we found that this method of visualisation can be applied on a running packaging machine. Indeed, any cracking and/or fissures which might occur by mechanical treatments in a packaging machine can be detected by this method. Mechanical treatment include, but are not limited to, stretching, bending and folding. Consequently, it is possible to identify which part of the packaging machine is responsible of strains, cracking and/or fissures in the intermediate layer of the multi-layer material. Therefore, the performance of the packaging machine can be easily controlled and necessary changes to parts of the machine can be directly evaluated. The minimum size of cracking and/or fissures detectable by this method is limited by quantum yield of the dye used and by the sensibility of the light measurement system.

## Claims

**1.** A method to determine cracking and/or fissures in an intermediate, stress sensitive layer (12) of a multi-layer material (10) characterised in that the method comprises the following steps:
- making of a multi-layer material comprising the intermediate layer, the intermediate layer comprising different fluorescence dyes printed on different sides of said intermediate layer;
- providing an electromagnetic radiation (20) from an external source which has a wavelength range which is substantially absorbed by said intermediate layer and at the same time excites the fluorescence dyes to emit electromagnetic radiation in a different wavelength range with respect to the electromagnetic radiation of the external source and with respect to each other;
- detecting the electromagnetic radiation emitted by the fluorescence dyes by at least two light measuring systems.

**2.** A method according to claim 1 characterised in that the electromagnetic radiation from an external source is ultraviolet radiation which is substantially absorbed by the intermediate layer.

**3.** A method according to claim 2 characterised in that one of the dyes is excited by the ultraviolet radiation to emit electromagnetic radiation corresponding to the yellow-green wavelength spectrum, whereas the other dye is excited by the ultraviolet radiation to emit electromagnetic radiation corresponding to the blue wavelength spectrum.

**4.** A method according to any of the preceding claims characterised in that each light measuring system is provided each with different light filter appropriate to the different fluorescence radiation of the dyes.

**5.** A multi-layer material (10) enabling the method to determine cracking and/or fissures in the intermediate layer (12) of the multi-layer material according to any of the preceding claims is sandwiched between at least two other layers (14, 14').

**7.** A multi-layer material according to claim 6 characterised in that said other layers are made of a plastic material selected from the group consisting of: polyethylene, (oriented) polyethylene terephthalate, (oriented) polypropylene and a combination thereof.

**8.** A multi-layer material according to any of the preceding claims 5 to 7 characterised in that said intermediate layer (12) comprises a perfume barrier layer, an oxygen barrier layer, a moisture barrier layer, or a combination thereof.

**9.** A multi-layer material according to claim 8 characterised in that said intermediate layer comprises a lacquer coating.

**10.** A multi-layer material according to any of the preceding claims 5 to 9 characterised in that the intermediate layer comprises an UV-light absorber.
